# EUROPEAN PATENT SPECIFICATION

(11) **EP 0 339 985 B1**
(45) Date of publication and mention of the grant of the patent: **16.06.1993**
(21) Application number: 89304179.8
(22) Date of filing: 26.04.1989
(51) Int. Cl.: G01B 11/06

(54) **Method for measuring film thickness**
Verfahren zum Messen der Dicke eines Films
Méthode pour mesurer l'épaisseur d'une pellicule

(30) Priority: 26.04.1988 JP 104719/88; 07.01.1989 JP 1631/89
(43) Date of publication of application: 02.11.1989
(73) Proprietor: MITSUBISHI DENKI KABUSHIKI KAISHA, Tokyo 100 (JP)
(72) Inventor: Tokumaru, Makoto Itami Seisakusho Mitsubishi Denk, Amagasaki city Hyogo Prefecture (JP); Nagao, Toshishige Itami Seisakusho, Amagasaki city Hyogo Prefecture (JP); Ariki, Masayuki Itami Seisakusho Mitsubishi Denki, Amagasaki city Hyogo Prefecture (JP); Nakano, Hideki Itami Seisakusho Mitsubishi Denki, Amagasaki city Hyogo Prefecture (JP)
(74) Representative: Lawson, David Glynne

(56) References cited:
- EP-A- 0 075 159
- EP-A- 0 250 764
- EP-A- 0 324 896
- FR-A- 2 287 677
- GB-A- 2 167 179
- US-A- 4 311 392

## Description

This invention relates to a method for measuring thickness of a sheet for measuring thickness of sheet such as magnetic tape.

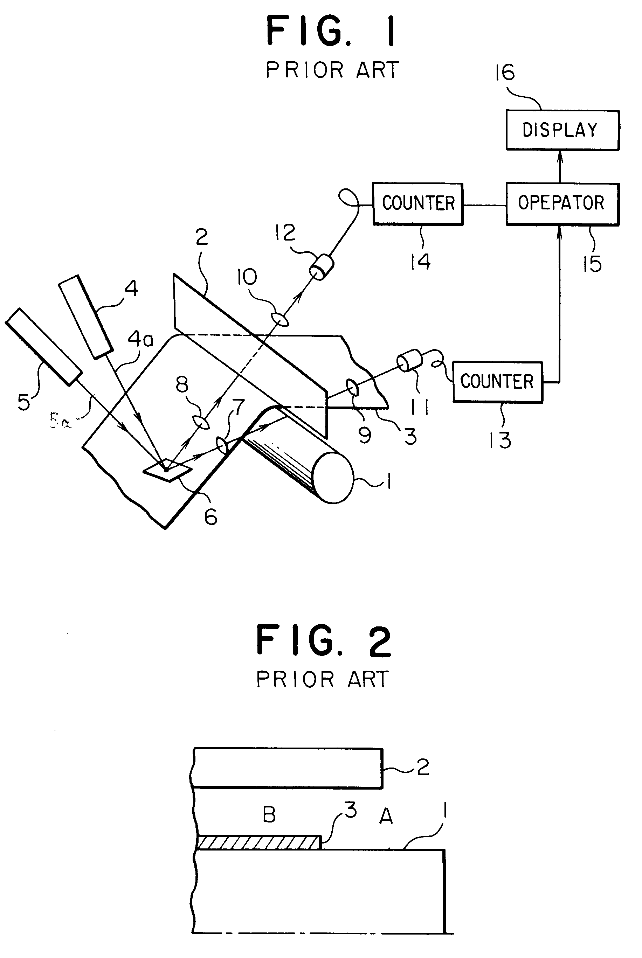

Fig. 1 is a schematic diagram showing a conventional sheet thickness measuring apparatus disclosed in our EP-A-250764 or Japanese Patent Laid-Open No. 60-174609 for example. In the figure, reference numeral 1 is a rotary shaft rotated at a predetermined speed, 2 is a light shield disposed parallel to the rotary shaft 1 with a predetermined distance from the surface of the rotary shaft 1, 3 is a sheet to be measured which is in intimate contact with the rotary shaft 1 and fed at the same speed as the rotary shaft 1, 4 and 5 are laser oscillators disposed at predetermined angles for generating laser beams 4a and 5a, respectively, 6 is a reflective mirror which is controlled to scan between the surface of the rotary shaft 1 and the light shield 2 when it receives the laser beam 4a and which is controlled to scan between the sheet 3 to be measured and the light shield 2 when it receives the laser beam 5a. 7 and 8 are lenses for collecting the laser beams 4a and 5a reflected from the reflective mirror 6, 9 and 10 are lenses for collecting the laser beams 4a and 5a, 11 and 12 are light receivers, 13 and 14 are counters, 15 is an operator and 16 is a display.

The operation will now be described. The laser beams 4a and 5a emitted from the laser oscillators 4 and 5 are reflected at the reflective mirror 6 to scan at an equal angular velocity. The reflected laser beams 4a and 5a are collected at the lenses 7 and 8 to have the smallest beam diameters at the gap positions A and B of the gap as shown in Fig. 2 and are scanned at a constant speed in a direction perpendicular to the rotary shaft 1, i.e. in the direction of the gap. At this time, the light receivers 11 and 12 receive laser beams only while the laser beams 4a and 5a are traversing over the gaps A and B.

Therefore, the output signals from the light receivers 11 and 12 are pulse waves having pulse widths proportional to the widths of the gaps A and B. These pulses are measured by the counters 13 and 14 to obtain count numbers corresponding to the pulse widths. The calculator 15 calculates the thickness from the count numbers and displays it on the display 16. When the count number of the counter 13 is a and the count number of the counter 14 is b, the thickness tₓ of the sheet 3 to be measured can be obtained by the following equation (1):

${\text{t}}_{\text{x}} {\text{=t}}_{\text{o}} \text{(1 - b/a) (1)}$

where, tₒ is the width (dimension) of the gap A.
Our EP-A-0211654 discloses a method of and apparatus for measuring thickness of a thin sheet on a rotary shaft, in which a single laser beam is scanned across the gap between the shaft and an optical shielding plate, and then is scanned across the gap between the shielding plate and the sheet disposed on the shaft, to determine the sheet thickness. If the laser beam scanning speed varies, erroneous results will be obtained.
EP-A-0211654 proposes to compensate for beam scanning speed variations by providing a reference slit in the shielding plate and detecting the time of passage of the laser beam across the reference slit. Placing a light-shielding plate in the head complicates the head structure and necessitates a relatively large beam scanning width.

EP 0250764, mentioned above, proposes to use a reference sheet, in order to eliminate errors due to eccentricity or uneven surface of the shaft.

Examples of other thickness measuring systems are disclosed for example in GB-A-2167179 and US-A-4311392.

The present invention resides in a method for measuring a sheet thickness comprising the steps of feeding a sheet to be measured by means of a rotary shaft while intimately contacting the sheet with the shaft, providing a light shield parallel to the axis of rotation of said rotary shaft at a predetermined distance from the rotary shaft surface to define a gap therebetween, scanning, using a reflective mirror, a laser beam across said gap between the surface of said sheet to be measured and said light shield, measuring the time during which the laser beam passes through the gap to determine the sheet thickness of the sheet to be measured by comparison with the time during which the beam passes through the gap between the shield and the shaft surface, and compensating the measurements for variations in the scanning speed of the beam,
characterized by providing a different-diameter portion on one end portion of said rotary shaft; initially, prior to feeding the sheet onto the shaft for thickness measurement, scanning the laser beam across the gaps between the shaft and the light shield and between the said portion and the light shield, and calculating the difference between the time (aₒ) during which the laser beam passes through said gap between said different-diameter portion and said light shield and the time (bₒ) during which the laser beam passes through the gap between said light shield and the portion of said rotary shaft adjacent to said different-diameter portion; thereafter feeding the sheet onto the shaft and monitoring said time difference while performing thickness measurement; comparing the monitored difference value with the initial value; and using the said comparison to compensate the measured thickness for variations in the speed of scanning.

The present invention will become more readily apparent from the following detailed description of the preferred embodiments of the present invention taken in conjunction with the accompanying drawings, in which:
Fig. 1 is a schematic diagram of the conventional film thickness measuring apparatus;
Fig. 2 is an explanatory view showing the main portion of Fig. 1;
Fig. 3 is a schematic diagram illustrating an apparatus to which one embodiment of the present invention is applied;
Fig. 4 is an explanatory view showing the main portion of Fig. 3; and
Fig. 5 is a schematic diagram illustrating an apparatus to which another embodiment of the present invention is applied.

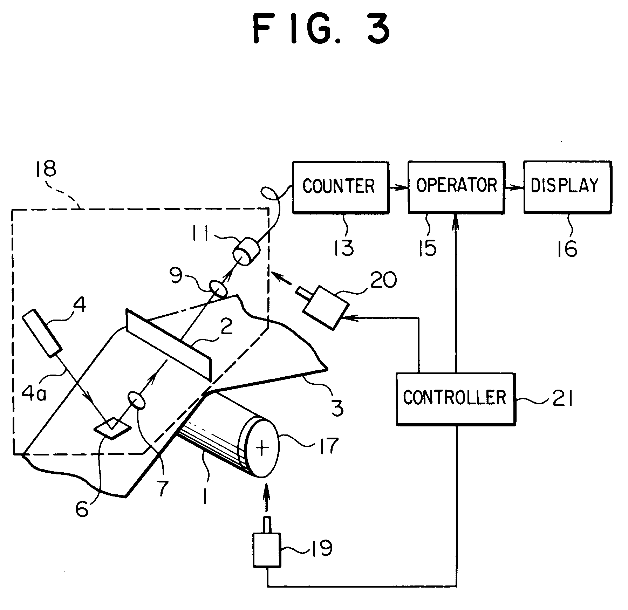

One embodiment of the present invention will now be described in conjunction with the drawings. In Fig. 3, the components designated by reference numerals 1-4, 4a, 6-16 are similar to those of the conventional design. 17 is a reference ring for detecting a deviation of the scanning width of the laser beam, 18 is a head unit reciprocatingly movable in the direction of axis of the rotary shaft, 19 is a first servo motor for driving the rotary shaft 1 at a speed determined by a control signal from a controller 21, 20 is a second servo motor for driving the head unit 18 at a speed determined by the control signal from the controller 21, 21 is a controller for providing positional information of the head unit 18 concerning the axial position of the rotary shaft with respect to the operator 15 and the control signal for synchronously moving the servo motors 19 and 20.

The operation will now be described. The laser beam 4a emitted from the laser beam source 4 is reflected at the reflective mirror 6 of the scanning mechanism and moved in a scanning manner over the gap between the light shield 2 and the sheet 3 to be measured, so that the laser beam 4a is received by the light receiver 11 only when the laser beam 4a passes through the gap. Therefore, the output signal from the light receiver 11 becomes a pulse waveform having a width proportional to the dimension of the gap, and these pulses are measured by the counter 13 to obtain a count number corresponding to the pulse width. The operator 15 calculates the thickness from this count number and displays it on the display 16.

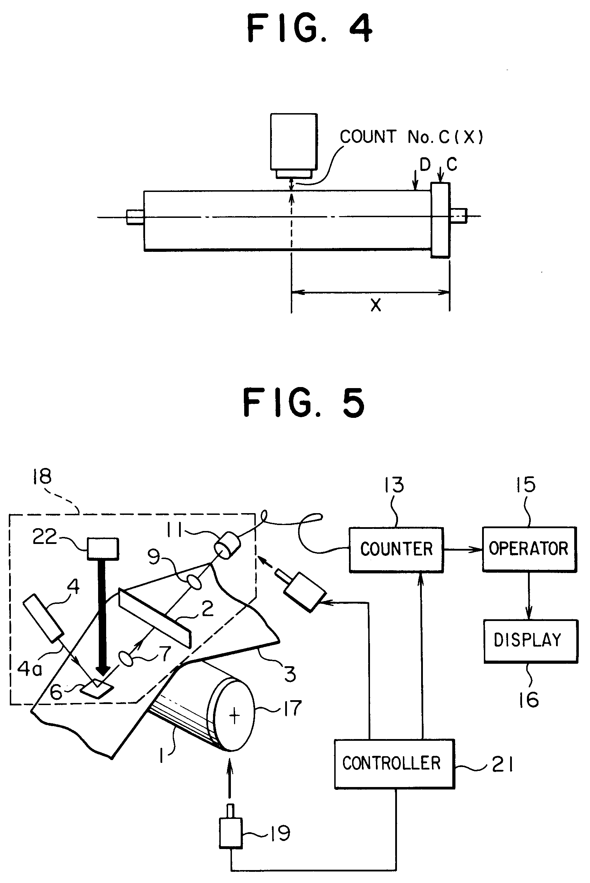

Before entering into the sheet thickness measuring of the sheet 3 to be measured, the rotary shaft 1 without having the sheet 3 to be measured on it is rotated at a speed in synchronism with the feed speed of the sheet 3 to be measured to cause the head unit 18 to be moved over one forward and backward movement between the opposite ends of the rotary shaft 1. During this movement, as shown in Fig. 4, a count number aₒ representing the gap width between the ring surface and the light shield 2 at the position of the reference ring 17 (Position C), a count number bₒ representing the gap width between the rotary shaft surface at (Position D) and the light shield 2, and a count number C(X) representing the gap width between the light shield 2 and the rotary shaft 1 at the position X in the axial direction of the rotary shaft 1 are measured and stored into the operator 15. The first servo motor 19 drives the rotary shaft 1 at a speed in accordance with a control signal generated from the controller 21, and the second servo motor 20 receives a control signal from the controller 21 to drive the head unit 18 at the speed in synchronism with the rotary shaft 1. The position X of the head unit 18 at this time with respect to the axial direction of the rotary shaft 1 is transmitted from the controller 20 to the operator 15, where the position X and the count number representative of the distance between the light shield 2 and the rotary shaft 1 at the position X is correlated and stored as C(X).

Then the sheet 3 to be measured is intimately contacted and fed by the rotary shaft 1 and the head unit 18 is reciprocatingly moved parallel to the axis of the rotary shaft 1 to measure the sheet thickness. A count number aₙ representing the gap width between the ring surface and the light shield 2 at the position C, a count number bₙ representing the gap width between the rotary shaft surface and the light shield 2 at the position D, and a count number Cₙ(X) representing the gap width between the light shield 2 and the sheet to be measured 3 at the position X of the head unit 18 are supplied to the operator 15. At this time, the ratio of the difference bₒ - aₒ of the pulse count numbers at the positions C and D and the above valve bₙ - aₙ, which is expressed by equation (2);

${\text{k}}_{\text{n}} {\text{= (b}}_{\text{n}} {\text{- a}}_{\text{n}} {\text{)/(b}}_{\text{o}} {\text{- a}}_{\text{o}} \text{) (2)}$

is a correction factor for correcting the variation of the laser beam scanning speed. Further, by operation-processing the stored count numbers Co(X) representing the distance between the light shield and the rotary shaft at the position X, and Cn(X) and kₙ, the sheet thickness value Fn at this point at nth scan can be calculated. The calculation equation is the following equation (3):

${\text{Fn = Lk}}_{\text{n}} \text{(Co(X) - Cn(X)) (3)}$

where, L is a proportional coefficient showing the relationship between the count number and the sheet thickness.

In this manner, without being affected by the variation in the laser beam scanning speed, the sheet thickness distribution of the sheet to be measured in the width and the length direction of the sheet can be accurately measured.

Then, another embodiment of the present invention will now be described in conjunction with the drawings. In Fig. 5, reference numeral 22 is a reflective mirror driving current control. The reflective mirror driving current is controlled so that the ratio kₙ of the pulse count numbers bₒ - aₒ and bₙ - aₙ is 1. In this manner, without being affected by a variation in the laser beam scanning speed, the sheet thickness distribution of the sheet to be measured in the width and the length direction of the sheet can be accurately measured.

As has been described, according to the above embodiment of the present invention, a different-diameter shaft portion is provided at the end portion of the rotary shaft, and the difference between a count number when the ordinary shaft diameter portion is scanned and a count number when the different-diameter shaft portion is scanned is monitored so that the variation in the laser scanning speed is corrected, whereby the sheet thickness distribution of the sheet to be measured in the width and the length direction of the sheet can be accurately measured.

## Claims

1. A method for measuring a sheet thickness comprising the steps of feeding a sheet (3) to be measured by means of a rotary shaft (1) while intimately contacting the sheet with the shaft, providing a light shield (2) parallel to the axis of rotation of said rotary shaft at a predetermined distance from the rotary shaft surface to define a gap therebetween, scanning, using a reflective mirror (6), a laser beam (4a) across said gap between the surface of said sheet to be measured and said light shield, measuring the time during which the laser beam passes through the gap to determine the sheet thickness of the sheet to be measured by comparison with the time during which the beam passes through the gap between the shield and the shaft surface, and compensating the measurements for variations in the scanning speed of the beam, characterized by
providing a different-diameter portion (17) on one end portion of said rotary shaft;
initially, prior to feeding the sheet onto the shaft for thickness measurement, scanning the laser beam across the gaps between the shaft and the light shield and between the said portion and the light shield, and calculating the difference between the time (aₒ) during which the laser beam passes through said gap between said different-diameter portion and said light shield and the time (bₒ) during which the laser beam passes through the gap between said light shield and the portion of said rotary shaft adjacent to said different-diameter portion;
thereafter feeding the sheet onto the shaft and monitoring said time difference while performing thickness measurement;
comparing the monitored difference value with the initial value;
and using the said comparison to compensate the measured thickness for variations in the speed of scanning.

2. A method as claimed in claim 1, in which the measured time during which the laser beam passes through the gap between the sheet surface and the light shield is corrected in accordance with the ratio between the monitored difference value and the initial difference value.

3. The method as claimed in claim 1, comprising controlling the laser beam scanning speed to maintain the monitored difference value equal to the initial difference value.

4. A method as claimed in claim 1, 2 or 3 comprising repeatedly scanning the laser beam across the gap at various positions along the rotary shaft.

## Patentansprüche

1. Verfahren zum Messen der Dicke eines Flächenkörpers, das folgende Schritte aufweist: Zuführen eines zu messenden Flächenkörpers (3) mittels einer drehenden Welle (1), während gleichzeitig der Flächenkörper mit der Welle in innigem Kontakt ist, Vorsehen einer Lichtabschirmung (2) parallel zu der Drehachse der drehenden Welle in einem vorbestimmten Abstand von der Oberfläche der drehenden Welle, um einen Spalt dazwischen zu definieren, Überstreichen des Spalts zwischen der Oberfläche des zu messenden Flächenkörpers und der Lichtabschirmung mit einem Laserstrahl (4a) unter Verwendung eines reflektierenden Spiegels (6), Messen der Zeitdauer, während der der Laserstrahl durch den Spalt geht, um die Flächenkörperdicke des zu messenden Flächenkörpers durch Vergleich mit der Zeitdauer, während der der Strahl durch den Spalt zwischen der Abschirmung und der Wellenoberfläche geht, zu bestimmen, und Kompensieren der Messungen in bezug auf Änderungen der Abtastgeschwindigkeit des Strahls, gekennzeichnet durch
Vorsehen eines durchmesserverschiedenen Bereichs (17) an einem Endabschnitt der drehenden Welle;
anfänglich, vor dem Zuführen des Flächenkörpers auf die Welle zur Dickenmessung, Überstreichen der Spalte zwischen der Welle und der Lichtabschirmung und zwischen dem genannten Bereich und der Lichtabschirmung mit dem Laserstrahl und Berechnen der Differenz zwischen der Zeitdauer (aₒ), während der der Laserstrahl durch den Spalt zwischen dem durchmesserverschiedenen Bereich und der Lichtabschirmung geht, und der Zeitdauer (bₒ), während der der Laserstrahl durch den Spalt zwischen der Lichtabschirmung und dem Bereich der drehenden Welle angrenzend an den durchmesserverschiedenen Bereich geht;
danach Zuführen des Flächenkörpers auf die Welle und Überwachen der Zeitdifferenz unter gleichzeitiger Durchführung der Dickenmessung;
Vergleichen des überwachten Differenzwerts mit dem Anfangswert;
und Nutzen des genannten Vergleichs, um die gemessene Dicke in bezug auf Änderungen der Abtastgeschwindigkeit zu kompensieren.

2. Verfahren nach Anspruch 1, wobei die gemessene Zeitdauer, während der der Laserstrahl durch den Spalt zwischen der Flächenkörperoberfläche und der Lichtabschirmung geht, nach Maßgabe des Verhältnisses zwischen dem überwachten Differenzwert und dem Anfangsdifferenzwert korrigiert wird.

3. Verfahren nach Anspruch 1, das das Steuern der Laserstrahlabtastgeschwindigkeit aufweist, um den überwachten Differenzwert gleich dem Anfangsdifferenzwert zu halten.

4. Verfahren nach Anspruch 1, 2 oder 3, das das wiederholte Überstreichen des Spalts mit dem Laserstrahl an verschiedenen Positionen entlang der drehenden Welle aufweist.

## Revendications

1. Procédé pour mesurer l'épaisseur d'une feuille, comprenant les étapes consistant à amener une feuille (3) à mesurer au moyen d'un arbre de rotation (1), tout en mettant la feuille en contact très proche avec l'arbre, à réaliser un écran lumineux (2) parallèle à l'axe de rotation dudit arbre de rotation à une distance prédéterminée de la surface de l'arbre de rotation pour définir un espace entre ceux-ci, à faire passer en balayant, en utilisant un miroir réfléchissant (6), un faisceau laser (4a) sur ledit espace entre la surface de ladite feuille à mesurer et ledit écran lumineux, à mesurer le temps pendant lequel le faisceau laser passe à travers l'espace pour déterminer l'épaisseur de la feuille à mesurer en le comparant avec le temps pendant lequel le faisceau passe à travers l'espace entre l'écran et la surface de l'arbre, et à compenser les mesures des variations dans la vitesse de balayage du faisceau, caractérisé par
la réalisation d'une portion de diamètre différent (17) sur une portion extrême dudit arbre de rotation;
le balayage initial, avant l'amenée de la feuille sur l'arbre en vue de la mesure de l'épaisseur, du faisceau laser à travers les espaces entre l'arbre et l'écran lumineux et entre ladite portion et ledit écran lumineux, et le calcul de la différence entre la période (aₒ) pendant laquelle le faisceau laser passe à travers ledit espace entre ladite portion de diamètre différent et ledit écran lumineux et la période (bₒ) pendant laquelle le faisceau laser passe à travers l'espace entre ledit écran lumineux et la portion dudit arbre de rotation adjacente à ladite portion de diamètre différent, à amener ensuite la feuille sur ledit arbre et à surveiller ladite différence de période pendant la réalisation de la mesure de l'épaisseur;
à comparer la valeur de différence détectée à la valeur initiale;
et à utiliser ladite comparaison pour compenser l'épaisseur mesurée pour des variations dans la vitesse de balayage.

2. Procédé selon la revendication 1, dans lequel la période mesurée pendant laquelle le faisceau laser passe à travers l'espace entre la sur face de feuille et l'écran lumineux, est corrigée en accord avec le rapport entre la valeur de différence détectée et la valeur de différence initiale.

3. Procédé selon la revendication 1, comprenant la commande de la vitesse de balayage du faisceau laser pour maintenir la valeur de différence détectée égale à la valeur de différence initiale.

4. Procédé selon la revendication 1, 2 ou 3, comprenant le balayage répété du faisceau laser à travers l'espace à diverses positions le long de l'arbre de rotation.
